# EUROPEAN PATENT SPECIFICATION

(11) **EP 2 123 089 B1**
(45) Date of publication and mention of the grant of the patent: **15.09.2010**
(21) Application number: 08724477.8
(22) Date of filing: 11.01.2008
(51) Int. Cl.: H04W 24/00

(54) **METHODS FOR MEASURING INTERFERENCE IN WIRELESS STATIONS**
VERFAHREN ZUR INTERFERENZMESSUNG BEI DRAHTLOSEN STATIONEN
PROCÉDÉS DE MESURE D'INTERFÉRENCE DANS DES STATIONS SANS FIL

(30) Priority: 12.01.2007 US 884775 P
(43) Date of publication of application: 25.11.2009
(73) Proprietor: Interdigital Technology Corporation, Wilmington, DE 19810 (US)
(72) Inventor: KWAK, Joseph, A., Bolingbrook, IL 60440 (US); LEVY, Joseph, S., Merrick, NY 11566 (US); ZUNIGA, Juan, Carlos, Montreal, Québec H3L 3J4 (CA); GRANDHI, Sudheer, A., Pleasanton, CA 94588 (US)
(74) Representative: Engdahl, Stefan
(86) International application number: PCT/US2008/000395
(87) International publication number: WO 2008/088737

(56) References cited:
- EP-A- 0 720 407
- EP-A- 1 667 373
- WO-A-02/19743
- US-A1- 2002 019 214
- US-A1- 2004 132 460
- US-A1- 2006 285 577

## Description

BACKGROUND

The carrier sense multiple access with collision avoidance (CSMA/CA) protocol for IEEE 802.xx communications requires each wireless station (STA) to determine that a channel is idle prior to transmitting. The physical (PHY) and medium access control (MAC) layers are tasked with sensing a channel prior to transmitting any frames. This is done using carrier sense mechanisms. Carrier sense mechanisms indicate whether a channel is busy when frames are detected on the channel or when radio-frequency (RF) power on the channel exceeds a certain threshold.

RF channel power detection is used to detect carriers from other users of the unlicensed channels which are not compatible with IEEE 802 standards. These carriers are considered interference for the STA. By detecting a carrier, the STA determines that the channel is busy and delays transmission. As a result, any source of RF interference power transmitted on an idle channel will prevent normal use of the channel and may have a negative impact on channel efficiency since the "busy" channel actually carries no data. If the source of RF interference power transmits during a busy channel, the signal to noise (S/N) ratio of the received frames changes, and frame errors and frame retransmissions are more likely. If the RF interference level falls below the STA's threshold for carrier sense the STA may transmit, however the RF interference may increase idle channel noise causing increased frame errors and frame retransmissions.

In IEEE 802 wireless networks, STAs are equipped to measure power within a wireless channel during idle periods. This idle channel measured power is the sum of thermal noise, interference from other STAs, and interference from non-wireless devices such as microwave ovens, other unlicensed industrial, scientific and medical (ISM) band users such as wireless phones, and other nearby sources of wideband radio-frequency interference (RFI) such as electric motors. Measurements of idle channel power include interference power from various interference sources, but do not provide an estimate of the magnitude of the interference sources because there is no base line for a channel without any interference.

Without a means to measure interference, the STA is unable to alert an access point (AP) or other network entities of changes, increases or decreases, in the perceived interference levels. Without such interference feedback from the STAs, the network is unable to make reasoned decisions for STA load balancing among APs, network frequency plans, and individual basic service set (BSS) channel selection. Furthermore, idle STAs are unable to autonomously alert an AP when local interference increases, causing increased delays for quality of service (QOS) service initiation as the AP tries, and retries, lower data rates until a sufficient QOS is established.

Direct measurement of interference requires control of the interference sources. Typically measurements of service quality or idle channel power are made with the sources of interference turned on, and then identical measurements are made with the sources of interference turned off. A quantified interference level may then be calculated from the differences in these direct measurements.

In a typical IEEE 802 wireless system, the STAs and APs are generally unable to control the sources of interference. Therefore, such a direct interference measurement is not possible.

Accordingly, a practical technique to indirectly measure or estimate interference in IEEE 802 systems is needed. Since STAs are unable to directly measure or estimate RF interference in the local environment, the capability to measure, or estimate, RF interference in a standardized manner would also be useful.

EP 1 667 373 discloses a protocol by which wireless network communication devices cooperatively exchange information about radio frequency interference detected in the network. The interference information collected through the cooperative protocol may then be used by devices in the network to adapt to mitigate interference related problems.

SUMMARY

Metrics for estimating RF interference may be derived from measurements of idle channel noise, channel utilization, medium access delay, STA throughput, BSS throughput and frame error rate. Further, metrics may be derived from the prior list of directly measured items in combination, as ratios and by rate of change analysis. RF interference is measured indirectly by measuring total idle channel power or by measuring changes in communication channel efficiency and frame errors.

RF interference measurements may also be based on various combinations of other direct measurements such as average noise power indicator (ANPI), STA data throughput, AP data throughput, STA medium access delay, node medium access delay, STA channel utilization, BSS channel utilization, and frame retransmission count. The detailed descriptions below describe the specific metrics for various useful combinations of these direct measurements, but other combinations are also possible.

BRIEF DESCRIPTION OF THE DRAWINGS

Figure 1 is a block diagram of a typical wireless system;

Figure 2 is a flow chart of a method for determining RF interference based on ANPI;

Figure 3 is a flow chart of another method for determining RF interference based on channel utilization;

Figure 4 is a flow chart of another method for determining RF interference based on medium access delay;

Figure 5 is a flow chart of another method for determining RF interference based on fragment error; and

Figure 6 is a flow chart of another method for determining RF interference based on throughput;

DETAILED DESCRIPTION

When referred to hereafter, the terminology "wireless transmit/receive unit (WTRU)" includes but is not limited to a user equipment (UE), a wireless station (STA), a fixed or mobile subscriber unit, a pager, a cellular telephone, a personal digital assistant (PDA), a computer, or any other type of user device capable of operating in a wireless environment. When referred to hereafter, the terminology "base station" includes but is not limited to a Node-B, a site controller, an access point (AP), or any other type of interfacing device capable of operating in a wireless environment.

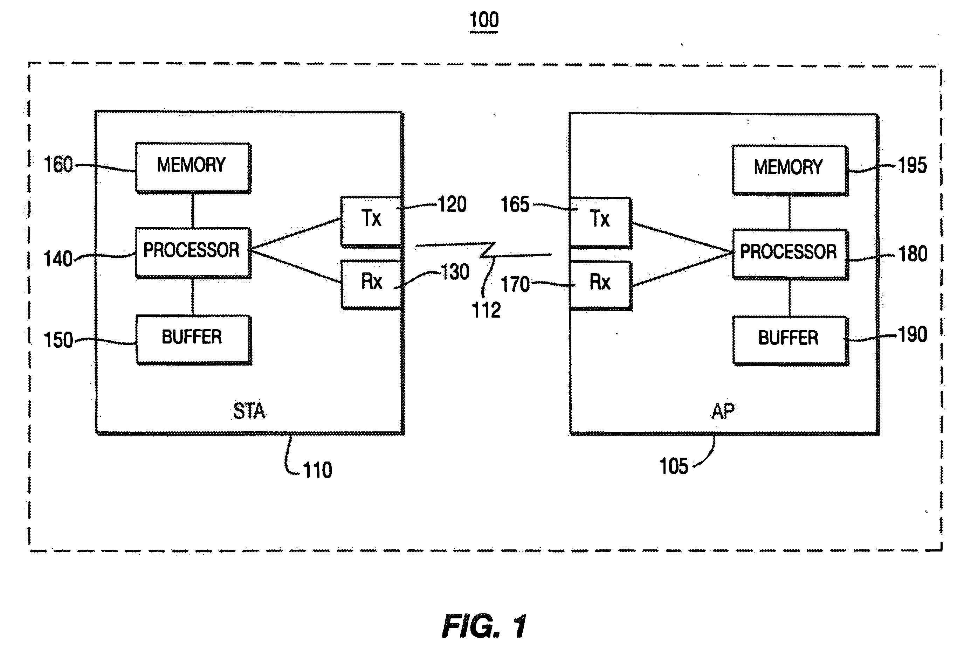

Figure 1 is a block diagram of a wireless communication system 100 configured to determine interference levels. The system includes an AP 105 and a wireless STA 110. The AP 105 and the STA 110 communicate via a wireless communication link, 112.

As shown in Figure 1, the STA 110 includes a transmitter 120, a receiver 130 and a processor 140. The processor 140 is attached to a buffer 150 and a memory 160. The processor 140 is configured to determine, or estimate RF interference using at least one technique described below.

Also shown in Figure 1, the AP 105 includes a transmitter 165, a receiver 170 and a processor 180. The processor 180 is attached to a buffer 190 and a memory 195. The processor 180 is configured to determine, or estimate, RF interference using at least one technique described below.

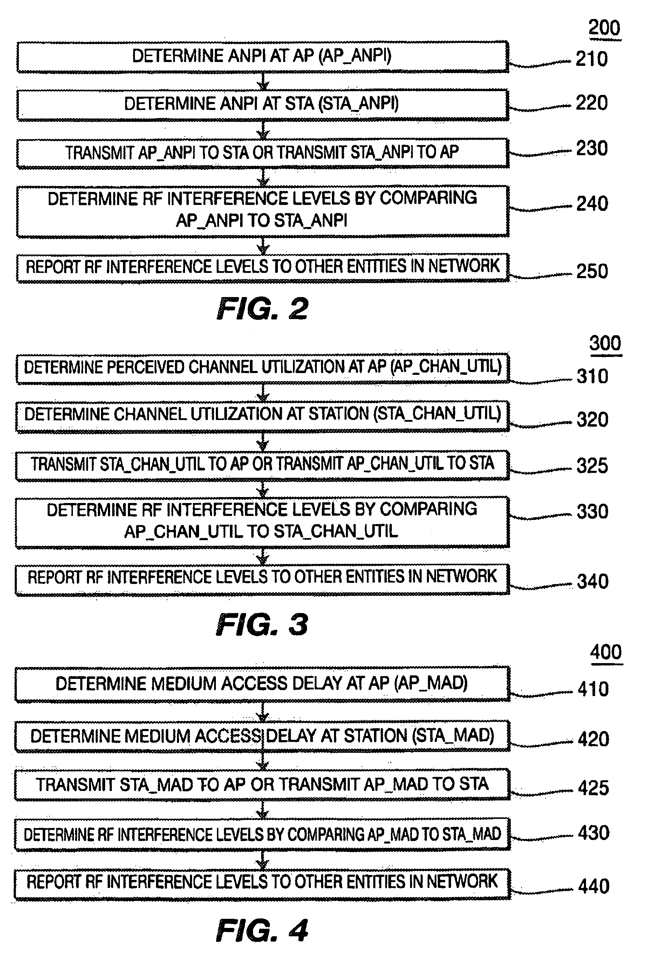

Figure 2 shows a flow diagram of a method 200 determining RF interference according to a first embodiment. First, the AP's average noise power indicator (AP_ANPI) is determined by constantly measuring the AP's perceived idle channel noise power and averaging it over a period of time (210). Then the STA's ANPI (STA_ANPI) is determined at the station (220). The AP then transmits the AP_ANPI to the STA, or the STA transmits the STA_ANPI to the AP (230). Then, the STA determines the presence of interference by comparing the STA_ANPI to the AP_ANPI (240).

When the STA measures a higher ANPI than the AP, it indicates that the STA is experiencing more RF interference than the AP and that RF interference power is equal to STA_ANPI minus AP_ANPI. When the STA measures a lower ANPI than the AP, it indicates the AP is experiencing more RF interference than the STA and that RF interference power is equal to AP_ANPI minus STA_ANPI. The ratio of these two ANPI measurements is equal to one when there is no RF interference at either the STA or the AP, or when the RF interference is the same at the STA and at the AP. Thus, the ratio of these two ANPI measurements may be used to indicate RF interference. A ratio > 1 indicates local RF interference at the STA, a ratio <1 indicates local RF interference at the AP. It should be noted that this metric is useful for low levels of RF interference only. Higher levels of RF interference which trigger the carrier sense mechanism will not be detectable using this metric. Optionally, the detection of RF interference onset, or termination of RF interference, may be reported to at least one other network entity, at 250.

In an alternative embodiment, not pictured, a STA may measure interference by monitoring the rate of change of the STA_ANPI. A sudden increase in the ANPI value indicates the onset of a new RF interference source at that STA. The STA software may store ANPI values in the buffer and compare older ANPI values to the most recent ANPI value and subtract the difference. If the difference is greater (increasing ANPI) than a selected threshold value (in dB) for a selected time window (measurement time for recent measurement less measurement time for older measurement), RF interference onset is detected at that STA. If the difference is less (decreasing ANPI) than a selected threshold value (in -dB) for a selected time window (measurement time for recent measurement less measurement time for older measurement), RF interference termination is detected at that STA. The detection of RF interference onset or termination may be reported by the STA to the AP or other network entity.

Figure 3 shows a flow diagram of a method 300 determining RF interference according to another embodiment. First, the AP's perceived channel utilization (AP_Chan_Util) is determined (310). The AP's channel utilization measurement serves as a baseline channel metric for the AP describing the percentage of time the channel is busy. Next, the STA's channel utilization (STA_Chan_Util) is determined (320). The AP then transmits the AP_Chan_Util to the STA, or the STA transmits the STA_Chan_Util to the AP (325). Finally, the presence of interference is determined by comparing the STA_Chan_Util to the AP_Chan_Util (330).

If a STA measures a different STA_Chan_Util in the STA's local environment, this may indicate the presence or absence of RF interference as compared to the AP's environment. When the STA measures higher channel utilization than the AP, it indicates the STA's carrier sense mechanism is detecting more RF interference power than the AP or that the STA is in radio range of other wireless transmissions which are not detectable by the AP. When the STA measures lower channel utilization than the AP, it may indicate that the AP is experiencing more RF interference than the STA or that the STA is not in radio range of certain other STAs which are transmitting to the AP. The ratio of these two channel utilization measurements is equal to one when there is no RF interference at either the STA or the AP, or when the RF interference is the same at the STA and at the AP. Thus, the ratio of these two ANPI measurements may be used to indicate RF interference. A ratio > 1 indicates more local RF interference at the STA, and a ratio <1 indicates more local RF interference at the AP. It should be noted that this metric is useful for high levels of RF interference which trigger the STA carrier sense mechanisms. Optionally, the detection of RF interference onset, or termination of RF interference, may be reported to at least one other network entity, at 340.

Figure 4 shows a flow diagram of a method 400 determining RF interference according to another embodiment. First, the AP's medium access delay (AP_MAD) is determined (410). The AP's medium access delay serves as a baseline channel metric for the AP describing the average medium access delay for all downlink traffic in the basic service set. Next, the STA's MAD (STA_MAD) is determined (420). The STA_MAD is a measure of the MAD for STA's uplink. The AP then transmits the AP_MAD to the STA, or the STA transmits the STA_MAD to the AP (425). Finally, the presence of interference is determined by comparing the STA_MAD and the AP_MAD (430).

If a STA measures a different medium access delay (STA_MAD) in the STA's local environment for its uplink traffic, this may indicate the presence or absence of RF interference as compared to the BSS. When the STA measures a higher MAD than the AP, it indicates the STA's carrier sense mechanism is detecting more RF interference power than the AP or that the STA is in radio range of other wireless transmissions which are not detectable by the AP. When the STA measures a lower MAD than the BSS, it may indicate that the AP is experiencing more RF interference than the STA or that the STA is not in radio range of certain other STAs which are transmitting to the AP. The ratio of these two channel MAD measurements is equal to 1 when there is no RF interference at either the STA or the AP, or when the RF interference is the same at the STA and at the AP. Thus, the ratio of these two MAD measurements may be used to indicate RF interference. A ratio > 1 indicates more local RF interference at the STA, a ratio <1 indicates more local RF interference at the AP. It should be noted that this method is useful for high levels of RF interference which trigger the STA carrier sense mechanisms. Optionally, the detection of RF interference onset, or termination of RF interference, may be reported to at least one other network entity, at 440.

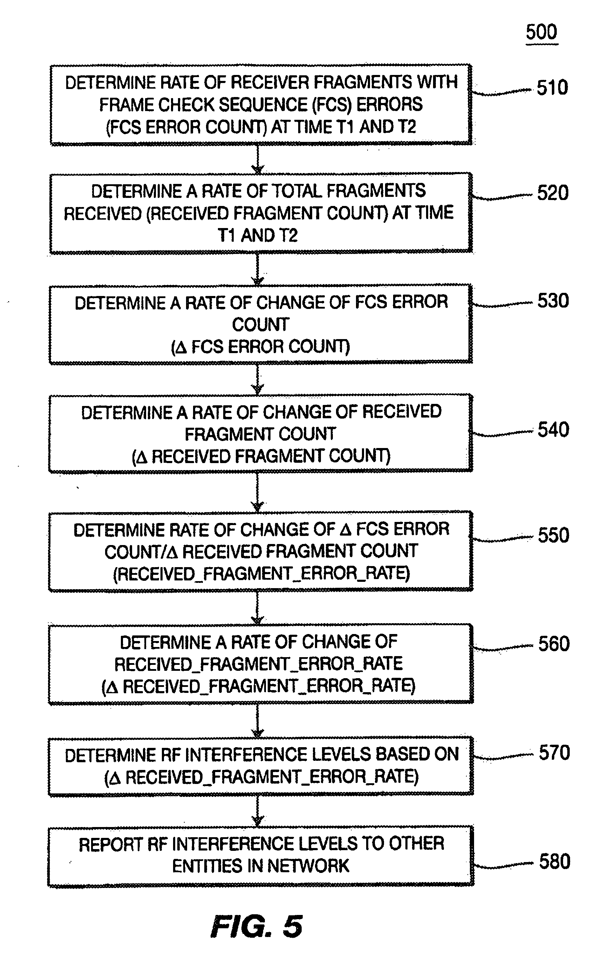

Figure 5 shows a flow diagram of a method (500) determining RF interference according to another embodiment. First a processor within the STA or AP determines a rate of received fragments with fragment count system (FCS) errors (FCSErrorCount) (510). At the same time, the processor determines a rate of total fragments received (ReceivedFragmentCount) (520). Then the processor determines the rate of change of the FCSErrorCount (ΔFCSErrorCount) (530). At the same time, the processor also determines a rate of change of the ReceivedFragmentCount (ΔReceivedFragmentCount) (540). Next, the processor determines the ratio of ΔFCSErrorCount to ΔReceivedFragmentCount (550). The ratio of these deltas represents the received fragment error rate. Then the processor determines a rate of change of the ratio of ΔFCSErrorCount to ΔReceivedFragmentCount (Δ[ΔFCSErrorCount /ΔReceivedFragmentCount]) (560). Finally, the processor determines the RF interference levels based on the Δ[ΔFCSErrorCount/ ΔReceivedFragmentCount] (570).

A sudden increase in the received Δ[ΔFCSErrorCount/ΔReceivedFragmentCount] indicates the onset of a new RF interference at that STA or AP. If the difference in Δ[ΔFCSErrorCount/ΔReceivedFragmentCount] is greater (increasing received fragment error rate) than a selected threshold value (in dB) for a selected time window, then RF interference onset is detected at that STA or AP. If the difference in the Δ[ΔFCSErrorCount/ΔReceivedFragmentCount] is less (decreasing received fragment error rate) than a selected threshold value (in -dB) for a selected time window (measurement time for recent received fragment error rate less- measurement time for the older received fragment error rate), RF interference termination is detected at that STA. Optionally, the detection of RF interference onset, or termination of RF interference, may be reported to at least one other network entity, at 580.

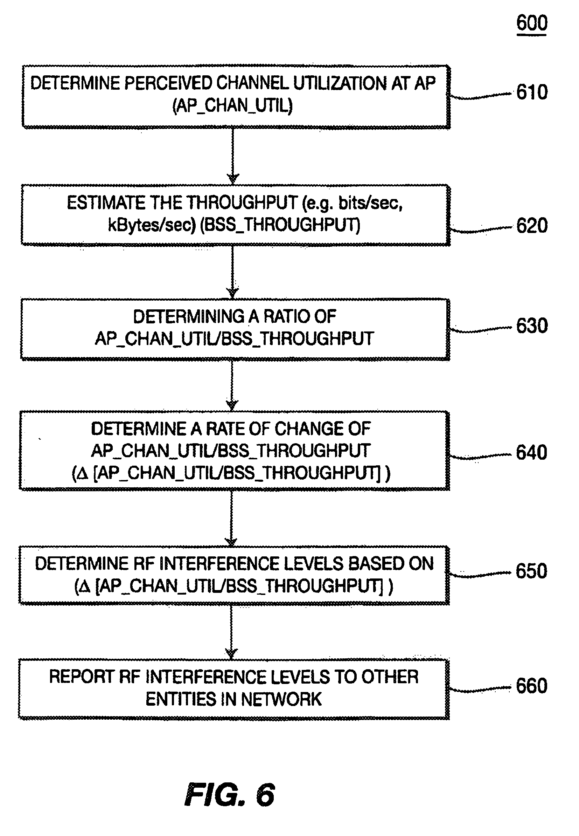

Figure 6 shows a flow diagram of a method for determining RF interference by measuring the rate of change of a BSS channel overhead performance metric. A high value for channel utilization divided by BSS throughput indicates high channel overhead and inefficient BSS operation. Therefore, the AP's channel utilization (AP_Chan_Util) is determined, at 610. Then the AP determines a BSS Throughput (BSS_Throughput) by determining a total number of fragments transmitted and received in over a predetermined period of time, at 620. Next the AP determines the ratio of the AP_Chan_Util to BSS_Throughput (AP_Chan_Util/BSS_Throughput), at 630. Then the AP determines a rate of change of the AP_Chan_Util/BSS_Throughput, (Δ [AP_Chan_Util/UBSS_Throughput]) at 640. Finally, the AP determines RF interference based on the Δ[AP_Chan_Util/BSS_Throughput], at 650. A sudden increase in the AP_Chan_Util/BSS_Throughput , or BSS channel overhead, indicates the onset of a new RF interference at that AP.

Alternatively, instead of monitoring the rate of change the AP may compare the AP_Chan_Util/BSS_Throughput to a predetermined threshold value. If the difference in the BSS channel overhead is greater (increasing BSS channel overhead) than a selected threshold value (in dB) for a selected time period, then RF interference onset is detected at that AP. If the difference in the BSS channel overhead is less than the predetermined threshold for a selected time window, then RF interference termination is detected at that AP. Optionally, the RF interference may be reported by the AP to the STAs in the BSS or to some other network entity, at 660.

It should be noted that with any of the methods described above certain measurements may need to be transmitted to the STAs in the BSS. For example, the metrics which may need to be transmitted to the STAs include AP_ANPI, AP_Chan_Util, and AP_MAD.

Although the features and elements of the present embodiments are described in particular combinations, each feature or element can be used alone without the other features and elements of the other embodiments or in various combinations with or without other features and elements of the present embodiments. The methods or flow charts provided herewith may be implemented in a computer program, software, or firmware tangibly embodied in a computer-readable storage medium for execution by a general purpose computer or a processor. Examples of computer-readable storage mediums include a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs).

Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), and/or a state machine.

A processor in association with software may be used to implement a radio frequency transceiver for use in a wireless transmit receive unit (WTRU), user equipment (UE), terminal, base station, radio network controller (RNC), or any host computer. The WTRU or STA may be used in conjunction with modules, implemented in hardware and/or software, such as a camera, a video camera module, a videophone, a speakerphone, a vibration device, a speaker, a microphone, a television transceiver, a hands free headset, a keyboard, a Bluetooth® module, a frequency modulated (FM) radio unit, a liquid crystal display (LCD) display unit, an organic light-emitting diode (OLED) display unit, a digital music player, a media player, a video game player module, an Internet browser, and/or any wireless local area network (WLAN) module.

## Claims

1. A method for use in a station, STA, of measuring radio-frequency, RF, interference, the method comprising:
receiving from an access point, AP, an average noise power indicator, AP_ANPI, measurement, which AP_ANPI is determined by measuring the idle channel power perceived by the AP and averaging it over time; and
determining an average noise power indicator of the STA, STA_ANPI, by measuring the idle channel power perceived by the STA and averaging it over time,
**characterized in that** the method further comprises:
determining RF interference by comparing the STA_ANPI and the AP_ANPI.

2. The method of claim 1, wherein determining RF interference by comparing the STA_ANPI and the AP_ANPI includes determining that the STA is experiencing higher RF interference in response to the STA_ANPI being greater than the AP_ANPI.

3. The method of claim 1, wherein determining RF interference by comparing the STA_ANPI and the AP_ANPI includes determining that the AP is experiencing higher RF interference in response to the STA_ANPI being less than the AP_ANPI.

4. The method of claim 1, wherein determining RF interference by comparing the STA_ANPI and the AP_ANPI includes using a ratio of STA_ANPI to AP_ANPI to determine RF interference.

5. A method for use in a station, STA, of measuring radio-frequency, RF, interference, the method comprising:
receiving from an access point, AP, a channel utilization metric, AP_CHAN_UTIL, which is the percentage of time the channel is perceived busy by the AP; and
determining channel utilization of the STA, STA_CHAN_UTIL, which is the percentage of time the channel is perceived busy by the STA,
**characterized in that** the method further comprises:
determining RF interference by comparing the STA_CHAN_UTIL to the AP_CHAN_UTIL.

6. The method of claim 5, wherein determining RF interference by comparing the STA_CHAN_UTIL and the AP_CHAN_UTIL includes determining that the STA is experiencing higher RF interference in response to the STA_CHAN_UTIL being greater than the AP_CHAN_UTIL.

7. The method of claim 5, wherein determining RF interference by comparing the STA_CHAN_UTIL and the AP_CHAN_UTIL includes determining that the AP is experiencing higher RF interference in response to the STA_CHAN_UTIL being less than the AP_CHAN_UTIL.

8. The method of claim 5, wherein determining RF interference by comparing the STA_CHAN_UTIL and the AP_CHAN_UTIL includes using a ratio of STA_CHAN_UTIL to AP_CHAN_UTIL to determine RF interference.

9. A method for use in a wireless station, STA, of measuring radio-frequency, RF, interference, the method comprising:
receiving from an access point, AP, a medium access delay metric, AP_MAD, which is the average medium access delay for all downlink traffic in the basic service set; and
determining a medium access delay metric of the STA, STA_MAD, which is the average medium access delay for all uplink traffic of the STA,
**characterized in that** the method further comprises:
determining RF interference by comparing the STA_MAD and the AP_MAD.

10. The method of claim 9, wherein determining RF interference by comparing the STA_MAD and the AP_MAD includes determining that the STA is experiencing higher RF interference in response to the STA_MAD being greater than the AP_MAD.

11. The method of claim 9, wherein determining RF interference by comparing the STA_MAD and the AP_MAD includes determining that the AP is experiencing higher RF interference in response to the STA_MAD being less than the AP_MAD.

12. The method of claim 9, wherein determining RF interference by comparing the STA_MAD and the AP_MAD includes using a ratio of STA_MAD to AP_MAD to determine RF interference.

## Patentansprüche

1. Verfahren zur Funkfrequenz-, HF-Interferenzmessung zur Verwendung in einer Station, STA, wobei das Verfahren aufweist:
Empfangen einer mittleren Rauschleistungsanzeiger-, AP_ANPI-Messung von einem Zugangspunkt, AP, wobei dieser AP_ANPI durch Messen der von der AP wahrgenommenen Leistung eines freien Kanals und Mittelnd dieser über die Zeit bestimmt wird; und
Bestimmen eines mittleren Rauschleistungsanzeigers der STA, STA_ANPI, durch Messen der von der STA wahrgenommenen Leistung eines freien Kanals und Mitteln dieser über die Zeit,
**dadurch gekennzeichnet, daß** das Verfahren ferner aufweist:
Bestimmen der HF-Interferenz durch Vergleichen des STA_ANPI und des AP_ANPI.

2. Verfahren nach Anspruch 1, wobei das Bestimmen der HF-Interferenz durch Vergleichen des STA_ANPI und des AP_ANPI ansprechend darauf, daß der STA_ANPI größer als der AP_ANPI ist, das Bestimmen umfaßt, daß die STA eine höhere HF-Interferenz erfährt.

3. Verfahren nach Anspruch 1, wobei das Bestimmen der HF-Interferenz durch Vergleichen des STA_ANPI und des AP_ANPI ansprechend darauf, daß der STA_ANPI kleiner als der AP_ANPI ist, das Bestimmen umfaßt, daß der AP eine höhere HF-Interferenz erfährt.

4. Verfahren nach Anspruch 1, wobei das Bestimmen der HF-Interferenz durch Vergleichen des STA_ANPI und des AP_ANPI die Verwendung eines Verhältnisses des STA_ANPI zu dem AP_ANPI umfaßt, um die HF-Interferenz zu bestimmen.

5. Verfahren zur Funkfrequenz-, HF-Interferenzmessung für die Verwendung in einer Station, STA, wobei das Verfahren aufweist:
Empfangen einer Kanalnutzungsmetrik, AP_CHAN_UTIL von einem Zugangspunkt, AP, welche der zeitliche Prozentsatz ist, mit dem der Kanal von dem AP als belegt wahrgenommen wird,
Bestimmen der Kanalnutzung der STA, STA_CHAN_UTIL, welche der zeitliche Prozentsatz ist, mit dem der Kanal von der STA als belegt wahrgenommen wird,
**dadurch gekennzeichnet, daß** das Verfahren ferner aufweist:
Bestimmen der HF-Interferenz durch Vergleichen der STA_CHAN_UTIL und der AP_CHAN_UTIL.

6. Verfahren nach Anspruch 5, wobei das Bestimmen der HF-Interferenz durch Vergleichen der STA_CHAN_UTIL und der AP CHAN UTIL ansprechend darauf, daß die STA_CHAN_UTIL größer als die AP_CHAN_UTIL ist, das Bestimmen umfaßt, daß die STA eine höhere HF-Interferenz erfährt.

7. Verfahren nach Anspruch 5, wobei das Bestimmen der HF-Interferenz durch Vergleichen der STA_CHAN_UTIL und der AP CHAN UTIL ansprechend darauf, daß die STA_CHAN_UTIL kleiner als die AP_CHAN_UTIL ist, das Bestimmen umfaßt, daß der AP eine höhere HF-Interferenz erfährt.

8. Verfahren nach Anspruch 5, wobei das Bestimmen der HF-Interferenz durch Vergleichen der STA_CHAN_UTIL und der AP_CHAN_UTIL die Verwendung eines Verhältnisses der STA_CHAN_UTIL zu der AP_CHAN_UTIL umfaßt, um die HF-Interferenz zu bestimmen.

9. Verfahren zur Funkfrequenz-, HF-Interferenzmessung für die Verwendung in einer drahtlosen Station, STA, wobei das Verfahren aufweist:
Empfangen einer Medienzugriffsverzögerungsmetrik, AP_MAD, von einem Zugangspunkt, AP, welche die mittlere Medienzugriffsverzögerung für den gesamten Abwärtsstreckenverkehr in dem grundlegenden Dienstesatz ist; und
Bestimmen einer mittleren Medienzugangsverzögerungsmetrik der STA, STA_MAD, welche die mittlere Medienzugriffsverzögerung für den gesamten Aufwärtsstreckenverkehr der STA ist,
**dadurch gekennzeichnet, daß** das Verfahren ferner aufweist:
Bestimmen der HF-Interferenz durch Vergleichen der STA_MAD und der AP_MAD.

10. Verfahren nach Anspruch 9, wobei das Bestimmen der HF-Interferenz durch Vergleichen der STA_MAD und der AP_MAD ansprechend darauf, daß die STA_MAD größer als die AP_MAD ist, das Bestimmen umfaßt, daß die STA eine höhere HF-Interferenz erfährt.

11. Verfahren nach Anspruch 9, wobei das Bestimmen der HF-Interferenz durch Vergleichen der STA_MAD und der AP_MAD ansprechend darauf, daß die STA_MAD kleiner als die AP_MAD ist, das Bestimmen umfaßt, daß der AP eine höhere HF-Interferenz erfährt.

12. Verfahren nach Anspruch 9, wobei das Bestimmen der HF-Interferenz durch Vergleichen der STA_MAD und der AP_MAD die Verwendung eines Verhältnisses der STA_MAD zu der AP_MAD umfaßt, um die HF-Interferenz zu bestimmen.

## Revendications

1. Procédé de mesure d'interférence de radiofréquences, RF, dans une station, STA, le procédé comprenant :
la réception en provenance d'un point d'accès, AP, d'une mesure d'indicateur de puissance moyenne du bruit, AP_ANPI, lequel AP_ANPI est déterminé en mesurant la puissance de voie au repos perçue par le point d'accès et en faisant sa moyenne dans le temps ; et
la détermination d'un indicateur de puissance moyenne du bruit, STA_ANPI, de la station, en mesurant la puissance de voie au repos perçue par la station et en faisant sa moyenne dans le temps,
**caractérisé en ce que** le procédé comprend en outré :
la détermination d'interférence RF en comparant l'indicateur STA_ANPI et l'indicateur AP_ANPI.

2. Procédé selon la revendication 1, dans lequel la détermination d'interférence RF en comparant STA_ANPI et AP_ANPI comprend la détermination du fait que la station subit une interférence RF supérieure en réponse au fait que STA_ANPI est supérieur à AP_ANPI.

3. Procédé selon la revendication 1, dans lequel la détermination d'interférence RF en comparant STA_ANPI et AP_ANPI comprend la détermination du fait que le point d'accès subit une interférence RF supérieure en réponse au fait que STA_ANPI est inférieur à AP_ANPI

4. Procédé selon la revendication 1, dans lequel la détermination d'interférence RF en comparant STA_ANPI et AP_ANPI comprend l'utilisation d'un rapport de STA_ANPI à AP_ANPI pour déterminer l'interférence RF.

5. Procédé de mesure d'interférence de radiofréquences, RF, dans une station, STA, le procédé comprenant :
la réception en provenance d'un point d'accès, AP, d'une métrique d'utilisation de voie, AP_CHAN_UTIL, qui est le pourcentage de temps où la voie est perçue comme occupée par le point d'accès; et
la détermination d'une utilisation de voie, STA_CHAN_UTIL, de la station, qui est le pourcentage de temps où la voie est perçue comme occupée par la station,
**caractérisé en ce que** le procédé comprend en outré :
la détermination d'interférence RF en comparant STA_CHAN_UTIL et AP_CHAN_UTIL.

6. Procédé selon la revendication 5, dans lequel la détermination d'interférence RF en comparant STA_CHAN_UTIL et AP_CHAN_UTIL comprend la détermination du fait que la station subit une interférence RF supérieure en réponse au fait que STA_CHAN_UTIL est supérieur à AP_CHAN_UTIL.

7. Procédé selon la revendication 5, dans lequel la détermination d'interférence RF en comparant STA_CHAN_UTIL et AP_CHAN_UTIL comprend la détermination du fait que le point d'accès subit une interférence RF supérieure en réponse au fait que STA_CHAN_UTIL est inférieur à AP_CHAN_UTIL

8. Procédé selon la revendication 5, dans lequel la détermination d'interférence RF en comparant STA_CHAN_UTIL et AP_CHAN_UTIL comprend l'utilisation d'un rapport de STA_CHAN_UTIL à AP_CHAN_UTIL pour déterminer l'interférence RF.

9. Procédé de mesure d'interférence de radiofréquences, RF, dans une station sans fil, STA, le procédé comprenant :
la réception en provenance d'un point d'accès, AP, d'une métrique de retard d'accès au support, AP_MAD, qui est le retard moyen d'accès au support pour le tout trafic de liaison descendante dans l'ensemble de services de base ; et
la détermination d'une métrique de retard d'accès au support de la station, STA_MAD, qui est le retard moyen d'accès au support pour le tout trafic de liaison montante de la station,
**caractérisé en ce que** le procédé comprend en outré :
la détermination d'interférence RF en comparant STA_MAD et AP_MAD.

10. Procédé selon la revendication 9, dans lequel la détermination d'interférence RF en comparant STA_MAD et AP_MAD comprend la détermination du fait que la station subit une interférence RF supérieure en réponse au fait que STA_MAD est supérieur à AP_MAD.

11. Procédé selon la revendication 9, dans lequel la détermination d'interférence RF en comparant STA_MAD et AP_MAD comprend la détermination du fait que le point d'accès subit une interférence RF supérieure en réponse au fait que STA_MAD est inférieur à AP_MAD

12. Procédé selon la revendication 9, dans lequel la détermination d'interférence RF en comparant STA_MAD et AP_MAD comprend l'utilisation d'un rapport de STA_MAD à AP_MAD pour déterminer l'interférence RF.
